# EUROPEAN PATENT APPLICATION

(11) **EP 1 288 259 A1**
(43) Date of publication of application: **05.03.2003**
(21) Application number: 01930068.0
(22) Date of filing: 11.05.2001
(51) Int. Cl.: C08L 45/00, C08L 63/08, C08J 5/18

(54) **NONCRYSTALLINE CYCLIC POLYOLEFIN/EPOXIDIZED DIENE BLOCK COPOLYMER COMPOSITION AND SHEET THEREOF**

(30) Priority: 12.05.2000 JP 2000140436
(71) Applicant: DAICEL CHEMICAL INDUSTRIES, Ltd., Sakai-shi, Osaka 590-0905 (JP)
(72) Inventor: YABUI, Akihiro, Ohtake-shi Hiroshima 739-0651 (JP)
(74) Representative: Benson, John Everett
(86) International application number: JP0103943
(87) International publication number: WO01085842

(57) **Abstract**

The present invention provides a composition comprising as essential ingredients (A) 80 to 95 wt% of a noncrystalline cyclic polyolefin and (B) 20 to 5 wt% of an epoxidized diene-based block copolymer. The composition gives a noncrystalline cyclic polyolefin-based sheet which has a degree of heat distortion ratio of 5% or lower at a thermal welding temperature of 95 to 160°C. The sheet is excellent in moldability, dimensional stability, and strength in welding bonding and is excellent also in impact resistance, flexural resistance, and processability for embossing.

## Description

### Technical Field

The present invention relates to a noncrystalline cyclic polyolefin/epoxidized diene-based block copolymer composition, and a noncrystalline cyclic polyolefin-based sheet having a thermally weldable groperty, and more particularly to a noncrystalline cyclic polyolefin-based sheet (including a film) which shows an excellent dimensional stability when a cash card, a credit card, a wall paper, a decorative laminate, or the like is molded by thermal welding using a hot press or the like.

### Background Art

Heretofore, for example, cash cards, credit cards, wallpaper, decorative laminate, and so on have been molded by laminating plastic sheets (including a film) with a base material such as a sheet made of a synthetic resin, paper, a metal plate, or a plywood by lamination using for example a print-laminating method using an adhesive, a thermal welding method using a hot press, and so on. For such a plastic sheet or a film, there have been used a polyvinyl chloride-based sheet, a polyolefin-based sheet, a polyester-based sheet, a noncrystalline polyolefin-based sheet, and so on.

However, the polyvinyl chloride-based sheet is inferior in heat resistance and dimensional stability as the heat distortion temperature thereof is relatively low. Also, a plasticizer, stabilizer, and so on are included in relatively large amounts, and the plasticizer and stabilizer are easily transferred. Therefore, it becomes brittle and the strength thereof tends to deteriorate. The polyolefin-based sheet has a difficulty of temperature control, a tendency of deteriorating dimensional stability and moldability due to being inferior in adherence, and also a tendency of decreasing its stiffness, embossing properties, or the like in thermal welding because of a relatively narrow range of its molding temperature. The polyester-based sheet is inferior in processability for thermal welding, alkali resistance, solvent resistance, and processability for embossing. In addition, the noncrystalline polyolefin-based sheet is superior in mechanical strength, moldability, transparency, processability for thermal welding, dimensional stability, and so on. However, it is very brittle and is inferior in impact resistance, flexural resistance, processability for embossing, and so on. Thus, practical usage has a limited tendency.

The present invention intends to provide a noncrystalline cyclic polyolefin-based sheet which is superior in moldability, dimensional stability, fusion strength, impact resistance, flexural resistance, and processability for embossing in thermal welding processing, and a composition used therein.

### Disclosure of the Invention

As a result of repeated intensive investigation for solving the above-mentioned problems, the present inventor has finally completed the present invention by finding that a composition that essentially includes a specific amount of noncrystalline cyclic polyolefin and a specific amount of epoxidized diene-based block copolymer is superior in moldability, dimensional stability, welding strength, impact resistance, flexural resistance, and processability for embossing at the time of thermal welding processing.

That is, according to a first aspect of the present invention, there is provided a noncrystalline cyclic polyolefin/epoxidized diene-based block copolymer composition, prepared by melt kneading of 75 to 95 wt% of a noncrystalline cyclic polyolefin (A) and 25 to 5 wt% of an epoxidized diene-based block copolymer (B).

According to a second aspect of the present invention, there is provided a noncrystalline cyclic polyolefin/epoxidized diene-based block copolymer composition as set forth in the first aspect of the invention, wherein the noncrystalline cyclic polyolefin (A) comprises a copolymer of an addition reactant or a hydrogenated product thereof between cyclopentadiene or a derivative thereof and norbornadiene or a derivative thereof with one or more unsaturated monomers selected from ethylene, butadiene, and styrene derivatives, or a partially hydrogenated product of the copolymer.

According to a third aspect of the present invention, there is provided a noncrystalline cyclic polyolefin/epoxidized diene-based block copolymer composition as set forth in the first aspect of the invention, wherein the noncrystalline cyclic polyolefin (A) comprises a copolymer of an addition reactant or a partially hydrogenated product thereof between dicyclopentadiene or a derivative thereof and ethylene with one or more unsaturated monomers selected from ethylene, butadiene, and styrene derivatives, or a hydrogenated product of the copolymer.

According to a fourth aspect of the present invention, there is provided a noncrystalline cyclic polyolefin/epoxidized diene-based block copolymer composition as set forth in the first aspect of the invention, wherein the noncrystalline cyclic polyolefin (A) comprises a ring-opening polymer of tetracyclo-3-dodecene or a derivative thereof with bicyclohepto-2-en or a derivative thereof, or a hydrogenated product of the polymer.

According to a fifth aspect of the present invention, there is provided a noncrystalline cyclic polyolefin/epoxidized diene-based block copolymer composition as set forth in any one of the first to fourth aspects of the invention, wherein the epoxidized diene-based block copolymer (B) contains 0.1 to 5.5 wt% of oxirane oxygen.

According to a sixth aspect of the present invention, there is provided a noncrystalline cyclic polyolefin-based sheet prepared by molding the noncrystalline cyclic polyolefin/epoxidized diene-based block copolymer composition as set forth in any one of the first to fifth aspects of the invention.

According to a seventh aspect of the present invention, there is provided a noncrystalline cyclic polyolefin-based sheet as set forth in the sixth aspect of the invention, in which the heat distortion ratio is 5% or less at a thermal welding temperature of 95 to 160°C.

### Best Mode for carrying out the Invention

Hereinafter, the noncrystalline cyclic polyolefin-based sheet of the present invention will be described in detail. It is to be noted that, in this specification, according to the enforcement of new Measurement Law, International Units are used as a unit. Therefore, "weight" which has been conventionally used as a meaning of mass will be described as "mass".

### [Noncrystalline cyclic polyolefin (A)]

As the noncrystalline cyclic polyolefin (A) that constitutes the noncrystalline cyclic polyolefin-based sheet in accordance with the present invention, there is exemplified a noncrystalline cyclic polyolefin having a repetitive unit represented by the following general formula.

- [ - (X)ₙ- (CH₂ - C(R¹) H) ]ₘ -

(wherein "n" denotes a positive integer of 1 or more, "m" denotes a positive number, R¹ denotes a hydrogen atom, a halogen atom, CH₃CH₂ group, or a C₆H₄R² group, R² denotes a hydrogen atom, a hydrocarbon group, an alkoxy group, a halogenated hydrocarbon group, or a halogen atom. Also, "x" denotes a structural unit of an addition reactant or a hydrogenated product thereof between cyclopentadiene or a derivative thereof and norbornadiene or a derivative thereof, or a structural unit of an addition reactant or a hydrogenated product thereof between dicyclopentadiene or a derivative thereof and ethylene. Furthermore, the respective repetitive units in one polymer molecule may be different from each other).

Examples of the addition reactant between cyclopentadiene or a derivative thereof and norbornadiene or a derivative thereof, or the partially hydrogenated product thereof; or the addition reactant between cyclopentadiene or a derivative thereof and ethylene, or the partially hydrogenated product thereof, which is used in the present invention, specifically include, but are not particularly limited to, tetracyclo-3-dodecene, 8-methyltetracyclo-3-dodecene, 8-ethyltetracyclo-3-dodecene, 8-propyltetracyclo-3-decene, 8-butyltetracyclo-3-decene, 8-isobutyltetracyclo-3-dodecene, 8-hexyltetracyclo-3-dodecene, 8-stearyltetracyclo-3-dodecene, 5,10-dimethyltetracyclo-3-dodecene, 2,10-dimethyltetracyclo-3-dodecene, 8,9-dimethyltetracyclo-3-dodecene, 8-ethyl-9-methyltetracyclo-3-dodecene, 8-methyl-9-ethyltetracyclo-3-dodecene, 8-cyclohexyltetracyclo-3-dodecene, 11,12-dimethyltetracyclo-3-dodecene, 2,7,9-trimethyltetracyclo-3-dodecene, 9-ethyl-2,7-dimethyltetracyclo-3-dodecene, 9-isobutyl-2,7-dimethyltetracyclo-3-dodecene, 9,11,12-trimethyltetracyclo-3-dodecene, 9-ethyl-11,12-dimethyltetracyclo-3-dodecene, 9-isobutyl-l1,12-dimethyltetracyclo-3-dodecene, 5,8,9,10-tetramethyltetracyclo-3-dodecene, 8-ethylidene-9-methyltetracyclo-3-dodecene, 8-ethylidene-9-ethyltetracyclo-3-dodecene, 8-ethylidene-9-isopropyltetracyclo-3-dodecene, 8-ethylidene-9-butyltetracyclo-3-dodecene, 8-ethylidenetetracyclo-3-dodecene, 8-n-propylidenetetracyclo-3-dodecene, 8-n-propylidene-9-methyltetracyclo-3-dodecene, 8-n-propylidene-9-ethyltetracyclo-3-dodecene, 8-n-propylidene-9-isopropyltetracyclo-3-dodecene, 8-n-propylidene-9-butyltetracyclo-3-dodecene, 8-isopropylidenetetracyclo-3-dodecene, 8-isopropylidene-9-methyltetracyclo-3-dodecene, 8-isopropylidene-9-ethyltetracyclo-3-dodecene, 8-isopropylidene-9-isopropyltetracyclo-3-dodecene, 8-isopropylidene-9-butyltetracyclo-3-dodecene, 8-chlorotetracyclo-3-dodecene, 8-bromotetracyclo-3-dodecene, 8-fluorotetracyclo-3-dodecene, and 8,9-dichlorotetracyclo-3-dodecene, hexacyclo-4-heptadecene, 12-methylhexacyclo-4-heptadecene, 12-ethylhexacyclo-4-heptadecene, 12-isobutylhexacyclo-4-heptadecene, and 1,6,10-trimethyl-12-isobutylhexacyclo-4-heptadecene, octacyclo-5-docosene, 15-methyloctacyclo-5-docosene, and 15-ethyloctacyclo-5-docosene, pentacyclo-4-hexadecene, 1,3-dimethylpentacyclo-4-hexadecene, 1,6-dimethylpentacyclo-4-hexadecene, and 15,16-dimethylpentacyclo-4-hexadecene, heptacyclo-5-eicosene, and heptacyclo-5-heneicosene, pentacyclo-4-pentadecene, 1,3-dimethylpentacyclo-4-pentadecene, 1,6-dimethylpentacyclo-4-pentadecene, 14,15-dimethylpentacyclo-4-pentadecene, and pentacyclo-4,10-pentadecadiene, and the like.

The noncrystalline cyclic polyolefin (A) that constitutes the noncrystalline cyclic polyolefin-based sheet in accordance with the present invention may be preferably a copolymer of an addition reactant or a partially hydrogenated product thereof between cyclopentadiene or a derivative thereof and norbornadiene or a derivative thereof with an addition reactant or a partially hydrogenated product thereof between dicyclopentadiene or a derivative thereof and ethylene and at least one unsaturated monomer selected from ethylene, butadiene or styrene derivative, or hydrogenated product of the copolymer. In the present invention, the hydrogenated product of the copolymer means a partially hydrogenated product of the copolymer or a completely hydrogenated product of the copolymer.

In addition, as the styrene derivative, for example, there are respectively used styrene, o-methylstyrene, m-methylstyrene, p-methylstyrene, α-methylstyrene, o-chlorostyrene, m-chlorostyrene, p-chlorostyrene, o-ethylstyrene, m-ethylstyrene, p-ethylstyrene, p-methoxystyrene, p-chloroethylstyrene, p-methyl-α-methylstyrene, p-tert-butylstyrene, and the like.

Furthermore, other examples of the noncrystalline cyclic polyolefin (A) may be a ring-opening polymer of tetracyclo-3-dodecene or a derivative thereof with bicyclohepto-2-en or a derivative thereof, or a hydrogenated product of the polymer.

The tetracyclo-3-dodecene or the derivative thereof that constitutes the noncrystalline cyclicpolyolefin may be specifically the same as an exemplified compound of the above-mentioned tetracyclo-3-dodecene or the derivative thereof (but excluding halogen derivatives)

In addition, examples of bicyclohept-2-ene or the derivative thereof that constitutes the noncrystalline cyclic polyolefin (A) specifically include bicyclohept-2-ene, 6-methylbicyclohept-2-ene, 5,6-dimethylbicyclohept-2-ene, 1-methylbicyclohept-2-ene, 6-n-butylbicyclohept-2-ene, 6-isobutylbicyclohept-2-ene, 7-methylbicyclohept-2-ene, and the like.

As the above-described noncrystalline cyclic polyolefin comprised of a copolymer of an addition reactant or a partially hydrogenated product thereof between cyclopentadiene or a derivative thereof and norbornadiene or a derivative thereof with at least one unsaturated monomer selected from ethylene, butadiene or styrene derivatives, or a hydrogenated product of the copolymer; a copolymer of an addition reactant or a partially hydrogenated product thereof between dicyclopentadiene or a derivative thereof and ethylene and at least one unsaturated monomer selected from ethylene, butadiene or styrene derivatives, or a hydrogenated product of the copolymer; a ring-opening polymer of tetracyclo-3-dodecene or a derivative thereof and bicyclohepto-2-en or a derivative thereof, or a hydrogenated product of the copolymer, or the like, there can be exemplified a commercial product such as "ZEONEX" manufactured by Nippon Zeon Co., Ltd., "APEL" manufactured by Mitsui Chemicals Inc., and "ARTON" manufactured by Japan Synthetic Rubber Corporation.

### [Epoxidized diene-based block copolymer (B)]

The epoxidized diene-based block copolymer (B) that constitutes the noncrystalline cyclic polyolefin-based sheet of the present invention is obtained by the epoxidation of a diene-based block copolymer or a partially hydrogenated product thereof.

Herein, the diene-basedblock copolymer means a block copolymer composed of a polymer block mainly comprising a vinyl aromatic compound and a polymer block mainly comprising a conjugated diene compound. A mass ratio (a mass ratio between the copolymer blocks) of the vinyl aromatic compound with respect to the conjugated diene compound is preferably of from 25/75 to 95/5, more preferably of from 25/75 to 80/20. Furthermore, a number average molecular weight of the block copolymer to be used in the present invention ranges from 5,000 to 1,000,000, preferably from 10,000 to 800,000, and the molecular weight distribution [a ratio (Mw/Mn) of a weight-average molecular weight (Mw) with respect to a number average molecular weight (Mn)] is 10 or less. Furthermore, the molecular structure of the block copolymer may be linear, branched, radial, or any combination thereof. For example, it may be a vinyl aromatic compound (X) block-conjugated diene compound (Y) block copolymer having the structure of X-Y-X, Y-X-Y-X, (X-Y-)₄Si, X-Y-X-Y-X, or the like. Furthermore, an unsaturated bond of the conjugated diene compound in the diene-based block copolymer may be one that is partially hydrogenated.

As the vinyl aromatic compound that constitutes the diene-based block copolymer, for example, one or more kinds may be selected from the group consisting of styrene; α-methylstyrene, vinyltoluene, p-tert-butylstyrene, divinylbenzene, p-methylstyrene, and 1, 1-diphenyl styrene, and of those styrene is especially preferred. Further, as the conjugated diene compound, for example, one or more kinds may be selected from the group consisting of butadiene, isoprene, 1,3-pentadiene, 2,3-dimethyl-1,3-butadiene, piperylene, 3-butyl-1,3-octadiene, phenyl-1,3-butadiene, and the like, and, of those, especially butadiene, isoprene, and the combination therebetween are preferred.

A method for manufacturing the block copolymer to be used in the present invention can be any manufacturing methods as far as it has the above structures . For example, a block copolymer composed of a vinyl aromatic compound with a conjugated diene compound can be synthesized in an inert solvent using a lithium catalyst or the like by methods described in each of the Official Gazettes such as JP 40-23798 B and JP 51-33184A. Furthermore, by methods described in JP 42-8704 B, JP 43-6636 B, or JP 59-133203 A Official Gazettes, the partially hydrogenated block copolymer to be used in the present invention can be synthesized in an inert solvent by hydrogenation in the presence of a hydrogenating catalyst.

The epoxidized diene-based block copolymer in the present invention can be obtained by reacting the above-mentioned block copolymer with an epoxidizing agent such as hydroperoxides or peracids in an inert solvent. The peracids may include performic acid, peracetic acid, and perbenzoic acid. In the case of the hydroperoxides, a catalytic effect can be obtained from a mixture of tungstic acid and caustic soda used together with hydrogen peroxide. from an organic acid used together with hydrogen peroxide, or from molybdenum hexacarbonyl used together with tertiary butyl hydroperoxide.

There is no close limit in the amount of the epoxidizing agent, and an appropriate amount thereof for each case is defined by individual epoxidizing agents to be used, the degree of epoxidation desired, variable factors of individual block copolymers to be used, or the like.

The isolation of the epoxidized diene-based block copolymer thus obtained can be performed by an appropriate method, such as a method of precipitating in a poor solvent, a method of throwing the polymer in hot water through agitation, a direct-desolvating method, or the like.

The content of an epoxy group in the epoxidized diene-based block copolymer (B) for the present invention is, in term of the amount of oxirane oxygen in the copolymer, 0.1 to 5.5 wt%, and preferably 0.1 to 3.5 wt% of oxirane oxygen. If the content of an epoxy group (the content of oxirane oxygen) is less than the above range, there is a tendency of decrease in adhesion at the time of thermal welding. If it is higher than the above range, there is such a tendency that this will lead to a poor compatibility between the ingredient (A) and the ingredient (B) , resulting in the generation of defective appearance.

A compounding ratio of the compositions that comprise the noncrystalline cyclic polyolef in (A) and the epoxidized diene-based block copolymer (B) which are respectively essential ingredients, which constitute the noncrystalline cyclic polyolefin-based sheet in accordance with the present invention, is 75 to 95 wt%, preferably 80 to 95 wt% of the noncrystalline cyclic polyolefin (A) and 25 to 5 wt%, preferably 20 to 5 wt% of the epoxidized diene-based block copolymer. If the noncrystalline cyclic polyolefin is less than 80 wt% (the epoxidized diene-based block copolymer is more than 20wt%), the dimensional stability is not sufficient. If it is higher than 95 wt% (the epoxidized diene-based block copolymer is less than 5 wt%), there is a tendency that the properties of impact resistance, flexural resistance, processability for embossing, thermal welding properties, and so on will become inferior.

### [Other compounding ingredients]

The noncrystalline cyclic polyolefin-based sheet of the present invention may be only comprised of the noncrystalline cyclic polyolefin and the epoxidized diene-based copolymer. In addition, other ingredients may be additionally mixed as far as the characteristics of the noncrystalline cyclic polyolefin-based sheet are not inhibited. The compounding ratio of other ingredients may be 40 wt% or less, preferably 30 wt% or less, more preferably 10 wt% or less based on the whole composition that constitutes the noncrystalline cyclic polyolefin-based sheet.

The other ingredients may include other elastomers, additives, fillers, and other thermoplastic resins. Specific examples of other elastomers may include styrene-based elastomers such as butadiene-styrene copolymers (including all random copolymers, block copolymers, graft copolymers, and so on) and hydrogenated products thereof, styrene-butadiene-styrene copolymers (SBS), hydrogenated styrene-butadiene-styrene copolymers (SEBS), isoprene-styrene copolymers (including all random copolymers, block copolymers, graft copolymers, and so on) and hydrogenated products thereof, hydrogenated styrene-isoprene copolymers (SEPS), hydrogenated styrene-vinyl isoprene copolymers (V-SEPS), styrene-isoprene-styrene copolymers (SIS), hydrogenated styrene-isoprene-styrene copolymers (SEPS), hydrogenated styrene-butadiene-olefin crystalline block copolymers (SEBC), and so on, polyolefin-based elastomers such as noncrystalline or low-crystalline polyolefin-α-olefin copolymers, a mixture of polyolefin resins with olefin-based rubbers, a mixture of polyolefin resins with partially cross-linked products of olefin-based rubbers, a mixture of polyolefin resins with completely cross-linked products of olefin-based rubbers, and so on, and polyester-based elastomers such as elastomers made of polyester-polyether copolymers, polyester-polyester copolymers, and so on, and polyamide elastomers such as elastomers made of polyamide-polyester copolymers, polyamide-polyether copolymers, and so on.

Examples of the additives may include thermo-stabilizers, antioxidants, photo-stabilizers, antistatic agents, ultraviolet ray absorbents, lubricants, dyes, pigments, fillers, and so on. Examples of the fillers may include calcium carbonate, barium sulfate. magnesium hydroxide, silica, titanium oxide, talc, and so on.

Examples of other thermoplastic resins may include polyolefin-based oligomers, polystyrene-based oligomers, petroleum resins, and so on.

As the method for preparing the composition in accordance with the present invention, there may be used a publicly known method used in the preparation of conventional polyolefin-based compositions. Specifically, there can be exemplified a blending method using a ribbon blender, a Henschel mixer, a tumbler, or the like, a kneading method using a kneader, a Banbury mixer, a roller, or the like, a method which includes performing melt kneading with a single or twin screw extruder, extruding into a shape of a strand shape, cutting into an appropriate size after or before solidification undercooling, and granulating into pellet, or the like, but it is not specifically limited.

The conditions of melt kneading are not limited to specific ones as far as it is within a range where a sheet having a thermally weldible property can be obtained through subsequent molding steps, for example, the kneading temperature is from 180 to 300°C, generally from 200 to 290°C, and the kneading time is 30 minutes or less, preferably from 0.1 to 30 minutes, generally about 0.5 to 20 minutes.

### [Molding method]

As a method for molding the noncrystalline cyclic polyolefin-based sheet (including films) in accordance with the present invention, there can be exemplified a melt extrusion method such as a T-die method using a T-die or an inflation method using a circular die, a calender method, a thermal press method, or an injection-molding method, a casting method in which the molding is performed by dissolving in a solvent, or the like. Of those, the melt extrusion method using the T-die is preferable because of, for example, readiness in molding into a thickness of 10 to 1,000 µm with only a slight unevenness. However, the method is not particularly limited thereto.

In view of an example of the melt extrusion method using the T-die, the molding may be performed by supplying pellets obtained by the method for preparing the above composition into an extruder in which the T-die temperature is set to about 200 to 300°C, extruding the pellet after the melt-kneading, followed by gradually cooling or rapidly cooling using a cooling roll having a surface temperature of 30 to 150°C, water cooling, or air cooling, and pulling out of the extruder.

The noncrystalline cyclic polyolefin-based sheet of the present invention may be used as it is. Alternatively, it may be optionally drawn or thermally set. A method for drawing or thermally setting is not particularly limited. Any publicly-known method, such as a uniaxial drawing method using a roll, or a sequential biaxial drawing method in which lateral drawing is performed after lengthwise drawing, a biaxial drawing method in which the lengthwise and lateral drawings are simultaneously performed, may be appropriately used to perform the extrusion and the thermal setting under conventionally publicly-known conditions.

### [Sheet (including films)]

The thickness in the noncrystalline cyclic polyolefin-based sheet of the present invention may be appropriately adjusted to, for example, 10 to 1,000 µm in general, depending on applications. For instance, 180 to 250 µm in the case of using in a single-layered card such as a prepaid card, 100 to 800 µm in the case of using in a core layer of a cash card or a credit card, about 50 to 100 µm in the case of using in an overlaying layer, 10 to 50 µm in the case of using as a sheet or the like, for example, to be printed or embossed, which is provided as a wall, ceiling, or roof finishing material to be laminated on, for example a surface-treated metal plate (a copper plate, an aluminum plate), plywood, asbestos slate board, gypsum board, particle board, or base material such as an unsaturated polyester, melamine, or the like, 10 to 50 µm in the case of using as, for example, a sheet that provides cloth or paper with waterproof properties by being adhered onto the back thereof, and 10 to 50 µm in the case of using as, for example, a sheet for decoration wall paper on which a metal is vaporized after providing a print design thereon can be exemplified, respectively, but the thickness is not limited to a specific one, so that the sheet may be adjusted to an appropriate thickness.

The noncrystalline cyclic polyolefin-based sheet of the present invention has excellent dimensional stability, impact resistance, flexural resistance, and processability for embossing because of being thermally welded firmly using a hot press system even though welding and adhesion are thermally carried out at high temperature (110 to 160°C) in the case of using as a single layer to be molded as a prepaid card, a cash card, or a credit card, or as an overlaying layer or core layer to be used as a laminate by a hot press method, in the case of using as a base material for a wall paper or as a material for finishing wall, ceiling, or roof to be printed or embossed and to be laminated on, for example a surface-treated metal plate (copperplate, aluminum plate),plywood, asbestos slate board, gypsum board, particle board, or base material such as an unsaturated polyester, a melamine, or the like, or for example in the case of laminating on a sheet of paper, cloth, or the like to provide water resistance, and in the case of using as, for example, a sheet for a gorgeous decoration wall paper on which a metal is vaporized after printing a print design thereon.

When the noncrystalline cyclic polyolefin-based sheet of the present invention is subjected to a thermal welding processing, the thermal welding temperature may be, for example, preferably of from 95 to 160°C, more preferably of from 110 to 150°C, and still more preferably of from 120 to 140°C. If the thermal welding temperature is less than 95°C, the thermal welding strength tends to be weakened and there is a tendency that it cannot be used as a polymer sheet for thermal welding, but it can be used depending on the application. If the thermal welding temperature is higher than 160°C, the sheet melts and the heat distortion ratio increases. Therefore, there is a tendency that the shape thereof will be hard to maintain.

### Examples

Hereinafter, the present invention will be described by means of the Examples. However, the present invention is not restricted by the following Examples.

Ingredient (A) , ingredient (B) , and other additive ingredients (ingredient C, ingredient D) used in the Examples and Comparative Examples will be described below.
(A)Noncrystalline cyclic polyolefin: APEL APL-6509T (manufactured by Mitsui Chemicals, Inc., a ring-opening polymer of tetracyclo-3-dodecene and bicyclohepto-2-en)
(B) Epoxidized diene-based block copolymer

### [Preparation Example 1]

300 g of a styrene-butadiene-styrene block copolymer [manufactured by Japan Synthetic Rubber Corporation, TR-2000, styrene/butadiene (weight ratio) =40/60] and 1, 500 g of ethyl acetate were charged into a reaction vessel having a jacket with a stirrer, a reflux condenser, and a thermometer, and were then dissolved. Subsequently, 165 g of 30 wt% ethyl acetate solution of peracetic acid was continuously dropped and an epoxidation reaction was performed for 3 hours at 40°C under stirring. The reaction liquid was cooled to ambient temperature and was then collected. An excess volume of methanol was added to precipitate polymers. The precipitate was washed with water after filtration and was then dried, resulting in obtaining an epoxidized diene-based block copolymer B1 with an oxirane oxygen concentration of 3.0 wt%.

### [Preparation Example 2]

An epoxidized product B2 was obtained by epoxidation with peracetic acid by the same way as that of Preparation Example 1 except that the resulting epoxidized product has an oxirane oxygen concentration of 0.5 wt%.

### [Preparation Example 3]

An epoxidized product B3 was obtained by the epoxidation with peracetic acid by the same way as that of Preparation Example 1 except that the resulting epoxidized product has an oxirane oxygen concentration of 5.5 wt%.
(C) Non epoxidized thermoplastic elastomer
   C1: TR-2000 (manufactured by JSR Corporation, a styrene-butadiene-styrene copolymer)
   C2: SEPTON 2002 (manufactured by Kuraray Co., Ltd., a styrene-based thermoplastic elastomer)
   C3: PER-R410E (manufactured by Tokuyama Corporation, a polyolefin-based elastomer)
(D) Linear crystalline thermoplastic resin
   D1: ULTZEX 1520L (Mitsui Chemicals Inc.: a low density polyethylene)
   D2: J104 (Grand Polymer Co., Ltd.: apolypropylene-basedresin)

### [Examples 1 to 7]

The respective ingredients described above were blended in a proportion represented in Table 1 and supplied to an extruder setup to a cylinder temperature of 220 to 250°C and a dice temperature of 250°C to obtain a mixture. Melt kneading was performed to extrude the mixture into the shape of a strand. Then, the strand was cut after cooling, resulting in obtaining pellets. Subsequently, the pellet was subjected to melt kneading in a T-die extruder set up to a cylinder temperature of 240 to 280°C and a T-die temperature of 260°C, followed by extruding with cooling solidification into the shape of a cooled roll at a surface temperature of about 70°C, resulting in obtaining a sheet with a thickness of 250 µm. Then, tensile strength, tensile elongation, impact strength, flexural resistance, processability for embossing, welding strength, heat distortion ratio (dimensional stability)at the time of welding, and outer appearance of the sheet were respectively investigated by the evaluation methods described below. The results are listed in Table 1.

### [Comparative Examples 1 to 6]

The respective ingredients described above were blended in a proportion of represented in Table 2 and supplied to an extruder set up to a cylinder temperature of 220 to 250°C and a dice temperature of 250°C to obtain a mixture. Melt kneading was performed to extrude the mixture into the shape of a strand. Then, the strand was cut after cooling, resulting in obtaining pellets. Subsequently, the pellets were subjected to melt kneading in a T-die extruder set up to a cylinder temperature of 240 to 280°C and a T-die temperature of 260°C, followed by extruding with cooling solidification into the shape of a cooled roll at a surface temperature of about 70°C, resulting in obtaining a sheet with a thickness of 250 µm. Then, tensile strength, tensile elongation, impact strength, flexural resistance, processability for embossing, welding strength, heat distortion ratio(dimensional stability) at the time of welding, and outer appearance of the sheet were respectively investigated by the evaluation methods described below. The results are listed in Table 2.

As is evident from Table 1 and Table 2, the noncrystalline cyclic polyolefin-based sheets in the respective Examples are superior in tensile strength, tensile elongation, impact strength, flexural resistance, and processability for embossing. In addition, when the thermal welding processing is performed using a hot press method, thermal welding strength is strong, and heat distortion ratio at the time of welding is small, so that it can be superior in dimensional stability.

### [Method for evaluating each property]

The measurement and evaluation method of each inspection item in the Examples and the Comparative Examples will be described below.
[Tensile strength]: The measurement was performed according to JIS K7113.
[Tensile elongation] : The measurement was performed according to JIS K7113.
[Impact strength]: The measurement was performed according to JIS P8134. One with no breakage observed is marked as "no breakage".
[Flexural resistance]: The measurement was performed according to JIS P-8115.
[Processability for embossing]: Embossing was performed and the conditions of protrusion was visually evaluated. One with a distinct shape having no generation of cracks or fractures thereon is represented by "○", while one with the generation of cracks or fractures is represented by "x".
[welding strength]: Two sheets, each of which is of 1mm in thickness, 75 mm in width, and 150 mm in length, were subjected to hot-press welding under respective temperature conditions of 100°C, 110°C, 120°C, 130°C, 140°C, and 150°C, at a pressure of 10 kg/cm², followed by measuring 180° peeling strength. One that did not peel off is represented as "ⓞ", one with a peeling strength of 1.0 kg/cm or over is represented as "○", one with a peeling strength of less than 1.0 kg/cm is represented as "x".
[Dimensional stability] : Two sheets, each of which is of 1mm in thickness, 75 mm in width, and 150 mm in length, were subjected to hot-press welding under respective temperature conditions of 100°C, 110°C. 120°C, 130°C, 140°C, and 150°C, at a pressure of 10 kg/cm², followed by measuring the heat distortion ratio of the area before the hot press and the heat distortion ratio of the area after the hot press. One with a heat distortion ratio of the area of less than 3% is represented as "ⓞ", one with a heat distortion rate of the area of from 3 to 5% is represented as "○". and one with a heat distortion ratio of the area of higher than 5% is represented by "x" .
[Outer appearance] : The prepared sheet was visually evaluated. One with no problem in appearance is represented as "○", one on which the generation of grits was seen at an extremely small portion is represented as "Δ", and one on which the generation of grits was seen on the whole surface is represented as "x".

### Possibility of Utilization in Industry

A sheet using the noncrystalline cyclic polyolefin/epoxidized diene-based block copolymer composition of the present invention is superior in dimensional stability at the time of welding, so that there can be provided a noncrystalline cyclic polyolefin-based sheet which does not generate heat deformation even though it is welded at high temperature for strong welding at the time of welding as a sheet, wall paper, or the like on a base material, and which is also superior in impact resistance and flexural resistance.

**Table 1**

| Example | 1 | 2 | 3 | 4 | 5 | 6 | 7 |
|---|---|---|---|---|---|---|---|
| Blend (parts by weight) | | | | | | | |
| A (APEL APL-6509T) | 80 | 90 | 85 | 90 | 90 | 90 | 85 |
| B1 | 20 | 10 | - | 10 | 10 | 10 | - |
| B2 | - | - | 15 | - | - | - | - |
| B3 | - | - | - | - | - | - | 15 |
| C1 (TR-2000) | - | - | - | 30 | - | - | - |
| C2(SEPTON 2002) | - | - | - | - | 30 | - | - |
| C3(PER-R410E) | - | - | - | - | - | 30 | - |

| Evaluation results | | | | | | | |
|---|---|---|---|---|---|---|---|
| Tensile strength (kg/cm²) | 540 | 510 | 500 | 530 | 510 | 520 | 450 |
| Tensile elongation (%) | 50 | 20 | 35 | 40 | 45 | 30 | 30 |
| Izod impact strength (kg-cm) | 20 | 14 | 22 | 28 | 27 | 27 | 20 |
| Flexural resistance | ○ | ○ | ○ | ○ | ○ | ○ | ○ |
| Processability for embossing | ○ | ○ | ○ | ○ | ○ | ○ | ○ |

| Welding strength | | | | | | | |
|---|---|---|---|---|---|---|---|
| Temperature of hot press: 100°C | ○ | ○ | ○ | ○ | ○ | ○ | ○ |
| Temperature of hot press: 110°C | ⓞ | ⓞ | ⓞ | ⓞ | ⓞ | ⓞ | ○ |
| Temperature of hot press: 120°C | ⓞ | ⓞ | ⓞ | ⓞ | ⓞ | ⓞ | ○ |
| Temperature of hot press: 130°C | ⓞ | ⓞ | ⓞ | ⓞ | ⓞ | ⓞ | ⓞ |
| Temperature of hot press: 140°C | ⓞ | ⓞ | ⓞ | ⓞ | ⓞ | ⓞ | ⓞ |
| Temperature of hot press: 150°C | ⓞ | ⓞ | ⓞ | ⓞ | ⓞ | ⓞ | ⓞ |

| Dimensional stability | | | | | | | |
|---|---|---|---|---|---|---|---|
| Temperature of hot press: 100°C | ⓞ | ⓞ | ⓞ | ⓞ | ⓞ | ⓞ | ⓞ |
| Temperature of hot press: 110°C | ⓞ | ⓞ | ⓞ | ⓞ | ⓞ | ⓞ | ⓞ |
| Temperature of hot press: 120°C | ⓞ | ⓞ | ⓞ | ⓞ | ⓞ | ⓞ | ⓞ |
| Temperature of hot press: 130°C | ⓞ | ⓞ | ⓞ | ⓞ | ⓞ | ⓞ | ⓞ |
| Temperature of hot press: 140°C | ○ | ○ | ○ | ○ | ○ | ○ | ○ |
| Temperature of hot press: 150°C | ○ | ○ | ○ | ○ | ○ | ○ | ○ |
| Outer appearance | ○ | ○ | ○ | ○ | ○ | ○ | Δ |

**Table 2**

| Comparative Example | 1 | 2 | 3 | 4 | 5 | 6 |
|---|---|---|---|---|---|---|
| Blend (parts by weight) | | | | | | |
| A(APEL APL-6509T) | 100 | 70 | 80 | 98 | - | - |
| B1 | - | 30 | - | 2 | - | - |
| C1 (TR-2000) | - | - | 20 | - | - | - |
| D1(ULTZEX 1520L) | - | - | - | - | 100 | - |
| D2(J104) | - | - | - | - | - | 100 |

| Evaluation results | | | | | | |
|---|---|---|---|---|---|---|
| Tensile strength (kg/cm²) | 530 | 490 | 460 | 510 | 340 | 310 |
| Tensile elongation(%) | 7 | 65 | 55 | 8 | >100 | >100 |
| Izod impact strength(kg-cm) | 8 | 25 | 19 | 9 | no frac ture | 8 |
| Flexural resistance | x | ○ | ○ | x | ○ | ○ |
| Processability for embossing | x | ○ | ○ | x | x | x |

| Welding strength | | | | | | |
|---|---|---|---|---|---|---|
| Temperature of hot press: 100°C | x | x | x | x | x | x |
| Temperature of hot press: 110°C | ○ | ○ | ○ | ○ | x | x |
| Temperature of hot press: 120°C | ○ | ○ | ○ | ○ | x | x |
| Temperature of hot press: 130°C | ○ | ⓞ | ⓞ | ○ | x | x |
| Temperature of hot press: 140°C | ⓞ | ⓞ | ⓞ | ⓞ | ○ | ○ |
| Temperature of hot press: 150°C | ⓞ | ⓞ | ⓞ | ⓞ | ○ | ○ |

| Dimensional stability | | | | | | |
|---|---|---|---|---|---|---|
| Temperature of hot press: 100°C | ⓞ | ⓞ | ⓞ | ⓞ | ⓞ | ⓞ |
| Temperature of hot press: 110°C | ⓞ | ⓞ | ⓞ | ⓞ | ⓞ | ⓞ |
| Temperature of hot press: 120°C | ⓞ | ⓞ | ⓞ | ⓞ | ⓞ | ○ |
| Temperature of hot press: 130°C | ⓞ | ⓞ | ⓞ | ⓞ | x | ⓞ |
| Temperature of hotpress: 140°C | ⓞ | ○ | ○ | ⓞ | x | x |
| Temperature of hot press: 150°C | ⓞ | ○ | ○ | ⓞ | x | x |
| Outer appearance | ○ | ○ | ○ | ○ | ○ | ○ |

## Claims

1. A noncrystalline cyclic polyolefin/epoxidized diene-based block copolymer composition, prepared by melt-kneading 75 to 95 wt% of a noncrystalline cyclic polyolefin (A) and 25 to 5 wt% of an epoxidized diene-based block copolymer (B).

2. A noncrystalline cyclic polyolefin/epoxidized diene-based block copolymer composition according to claim 1, wherein the noncrystalline cyclic polyolefin (A) comprises a copolymer of an addition reactant or a hydrogenated product thereof between cyclopentadiene or a derivative thereof and norbornadiene or a derivative thereof with one or more unsaturated monomers selected from ethylene, butadiene, and styrene derivatives, or a partially hydrogenated product of the copolymer.

3. A noncrystalline cyclic polyolefin/epoxidized diene-based block copolymer composition according to claim 1, wherein the noncrystalline cyclic polyolefin (A) comprises a copolymer of an addition reactant or a partially hydrogenated product between dicyclopentadiene or a derivative thereof and ethylene with one or more unsaturated monomers selected from ethylene, butadiene, and styrene derivatives, or a hydrogenated product of the copolymer.

4. A noncrystalline cyclic polyolefin/epoxidized diene-based block copolymer composition according to claim 1, wherein the noncrystalline cyclic polyolefin (A) comprises a ring-opening polymer comprised of tetracyclo-3-dodecene or a derivative thereof with bicyclohepto-2-en or a derivative thereof, or a hydrogenated product of the copolymer.

5. A noncrystalline cyclic polyolefin/epoxidized diene-based block copolymer composition according to any one of claims 1 to 4, wherein the epoxidized diene-based block copolymer (B) contains 0.1 to 5.5 wt% of oxirane oxygen.

6. A noncrystalline cyclic polyolefin-based sheet prepared by molding the noncrystalline cyclic polyolefin/epoxidized diene-based block copolymer composition according to any one of claims 1 to 5.

7. A noncrystalline cyclic polyolefin-based sheet according to claim 6, wherein the heat distortion ratio is 5% or less at a thermal welding temperature of 95 to 160°C.
